(19) Europäisches Patentamt / European Patent Office / Office européen des brevets

(11) **EP 3 761 053 B1**

(12) **EUROPEAN PATENT SPECIFICATION**

(45) Date of publication and mention
of the grant of the patent:
**06.03.2024 Bulletin 2024/10**

(21) Application number: **19184727.6**

(22) Date of filing: **05.07.2019**

(51) International Patent Classification (IPC):
*G01S 7/03* ⁽²⁰⁰⁶·⁰¹⁾     *G01S 7/35* ⁽²⁰⁰⁶·⁰¹⁾
*G01S 13/32* ⁽²⁰⁰⁶·⁰¹⁾     *G01S 13/34* ⁽²⁰⁰⁶·⁰¹⁾
*G01S 7/00* ⁽²⁰⁰⁶·⁰¹⁾     *G01S 13/10* ⁽²⁰⁰⁶·⁰¹⁾
*G01S 7/28* ⁽²⁰⁰⁶·⁰¹⁾     *G01S 13/931* ⁽²⁰²⁰·⁰¹⁾

(52) Cooperative Patent Classification (CPC):
**G01S 7/03; G01S 7/006; G01S 7/28; G01S 7/352;
G01S 13/10; G01S 13/325; G01S 13/34;
G01S 13/931**

(54) **RADAR SENSOR, METHOD OF OPERATING THE RADAR SENSOR AND PROGRAM CODE**

RADARSENSOR, VERFAHREN ZUM BETRIEB DES RADARSENSORS UND PROGRAMMCODE

CAPTEUR RADAR, PROCÉDÉ DE FONCTIONNEMENT DE CAPTEUR RADAR ET CODE DE PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.01.2021 Bulletin 2021/01**

(73) Proprietor: **indie Semiconductor FFO GmbH
15236 Frankfurt (Oder) (DE)**

(72) Inventor: **WINKLER, Wolfgang
15234 Frankfurt (Oder) (DE)**

(74) Representative: **Maiwald GmbH
Elisenhof
Elisenstraße 3
80335 München (DE)**

(56) References cited:
**EP-A1- 2 985 625       WO-A1-2019/037857
US-A1- 2012 092 205    US-B2- 7 283 087**

## Description

### Technical field

The invention relates to the technical field of radar sensors and communication devices. The invention is defined in apparatus claim 1, corresponding method claim 15 and corresponding program code claim 16.

### Background

Radar sensors can be used to determine the distance of an object, the speed of an object and to detect material properties, for example the thickness of a dielectric material. Also, radar sensors can be used for determining a topology of an object. Such radar sensors may also be called imaging radar sensors.

In order to communicate with external devices, such as a user device or a backend server, wire bound communication technologies may be used. Examples of such communication technologies are networks based on HART, field bus or other protocols. Additionally or alternatively, wireless communication protocols may be used, such as WLAN or Bluetooth. US 7 283 087 B2 describes a radar having a transmission oscillator which can be excited quasi-phase coherently ba an evaluation oscillator.

US 2012/092205 A1 describes a coherent multi-band radar and communications transceiver.

### Summary

It may be seen as an object of the invention to provide for an alternative radar sensor which has efficient radar measurement and communication capabilities.

A first aspect of the present disclosure relates to a radar sensor, comprising a combined radar sensor and communication circuit with radar and communication capabilities. The combined circuit is configured to assume a radar mode, in which radar signals are emitted and received, and a communication mode, in which communication signals are emitted and received. The frequencies of the emitted and received radar signals and communication signals are, according to an embodiment, above 1 GHz, or even above 40 GHz, or even 200 GHz.

The combined circuit may be configured in such a way, that the frequencies used for the communication signals are within the frequency band used for the radar signals.

The radar sensor and, more specifically, the combined circuit, comprises a transmit path and a receive path.

The transmit path comprises a first oscillator with a first tuning input, configured to generate a transmit radar signal, and a transmit antenna, configured to emit (i.e., transmit) the transmit signal towards an object, such as a filling material in a container, a door, an object on a transport band in a factory, or, more generally, an object to be detected, such as a person or a car.

The receive path comprises a receive antenna, configured to receive the transmit signal after it has been reflected by the object, and also a communication signal emitted from an external transmit device. It further comprises a second oscillator with a second tuning input.

Further, a coupling is provided, configured to electromagnetically couple the first oscillator with the second oscillator, when the radar sensor is in radar mode and a difference in a tuning voltage at the first tuning input and the second tuning input does not exceed a predefined threshold, such that the first oscillator and the second oscillator are encouraged to oscillate at the same frequency.

The coupling may provide a so-called weak coupling, which can be overcompensated by the combined circuit by applying an appropriately high difference in tuning voltages at the two tuning inputs.

Thus, a radar sensor may be provided, which has a high performance at low cost, high reliability and small size suitable for automotive and other applications. It may be manufactured at low-cost in series production.

According to the invention, the coupling is configured to electromagnetically "de-couple" the first oscillator from the second oscillator, when the radar sensor is in a communication mode and the difference in the tuning voltage at the first tuning input and the second tuning input exceeds the predefined threshold, such that the first oscillator and the second oscillator are able to oscillate at different frequencies and are not, or at least not significantly, encouraged to oscillate at the same frequency.

In other words, the radar sensor is configured to assume either a communication mode, in which the radar sensor can communicate with remote devices, i.e., transmit measured values or receive configuration or parameterization instructions from the remote device. It can switch from the communication mode to the radar mode, in which object detection takes place, such as filling level measurements, velocity measurements of objects or position measurements of objects.

Switching from the communication mode to the radar mode, and vice versa, is performed by adjusting the difference in the tuning voltage at the first tuning input and the second tuning input. Is this difference small enough, or even zero, a coupling between the two oscillators is strong enough to make them oscillate at exactly the same frequency. Is the difference in the voltage above a predefined threshold voltage, the coupling between the two oscillators is too weak to encourage the two oscillators to oscillate at the same frequency. In this mode, they are allowed to oscillate at different frequencies, thus allowing for communication applications. The weak coupling between the two oscillators can be accomplished by simply placing both oscillators side by side at the same chip. Coupling mechanisms through the substrate will cause coupling effects and also electromagnetic coupling will take action. Additionally, coupling mechanisms with inserted MIM-capacitors between sensitive nodes of the oscillators will enhance coupling.

According to a further embodiment, the first oscillator and the second oscillator have the same circuit topology and the same layout. They are identical.

According to another embodiment, the functional blocks of the transmit path and the receive path, i.e., the first oscillator, the first tuning input, the transmit antenna, the receive antenna, the second oscillator and the second tuning input, etc., are placed on a single chip.

According to another embodiment, the transmit path further comprises a modulator with a data input and a power amplifier.

According to another embodiment, the power amplifier and the modulator of the transmit path are implemented in one single functional block as a power amplifier with gain control for amplitude modulation.

According to another embodiment, the receive path further comprises a mixer, a filter, a demodulator with a data output and a low noise amplifier.

According to another embodiment, the receive path is configured as a quadrature receive path.

According to another embodiment, the first oscillator and the second oscillator have the same voltage at their tuning inputs and both oscillators oscillate at the same frequency, when the radar sensor is in radar mode. In other words, the voltage difference at the tuning inputs is zero.

According to another embodiment, the first oscillator and the second oscillator have different voltages at their tuning inputs and both oscillators oscillate at different frequencies, when the radar sensor is in communication mode.

A communication system comprises two combined circuits. A radar system comprises one or more combined circuits.

According to another embodiment of the communication system with two combined circuits, the transmit frequency of the transmit path of first combined circuit corresponds to the receive frequency of the receive path of second combined circuit, and the transmit frequency of the second combined circuit corresponds to the receive frequency of the receive path of first combined circuit, when the radar sensor is in communication mode.

According to another embodiment, the second oscillator is coupled to the first oscillator by injection locking.

According to another embodiment, the second oscillator is coupled to the first oscillator by capacitive coupling between oscillator signal nodes.

According to another embodiment, the second oscillator is coupled to the first oscillator by transformer coupling between oscillator signal branches.

Another aspect of the present disclosure relates to a vehicle, comprising the above and below described radar sensor.

Another aspect of the present disclosure relates to a method of operating the above and below described radar sensor, in which the radar sensor assumes a radar mode, in which radar signals are emitted and received, and in which the first oscillator and the second oscillator are electromagnetically coupled to each other, such that the first oscillator and the second oscillator are encouraged to oscillate at the same frequency.

This radar mode can be switched to a communication mode, in which communication signals are emitted and received, and in which the first oscillator and the second oscillator receive different tuning voltages, such that the first oscillator and the second oscillator are encouraged to oscillate at different frequencies.

A further aspect of the present disclosure relates to a program code, which, when being executed by a processor of the radar sensor, causes the radar sensor to perform the above and further below described method steps.

A computer-readable medium on which the above-described program element is stored is provided.

A computer-readable medium may be a floppy disk, a hard disk, a CD, a DVD, an USB (Universal Serial Bus), storage device, an RAM (Random Access Memory), an ROM (Read Only Memory) and an EPROM (Erasable Programmable Read Only Memory). A computer-readable medium may also be a data communication network, e.g., the Internet, which allows downloading a program code or program element.

These and other aspects of the present disclosure will become apparent from and elucidated with reference to the embodiments described hereinafter.

Exemplary embodiments of the present disclosure will now be described in the following, with reference to the following drawings.

Brief description of the drawings

Fig. 1 shows a radar sensor, which is not part of the invention, but only contributes to the understanding of the invention.

Fig. 2a and 2b show a communication circuit, which is not part of the invention, but only contributes to the understanding of the invention.

Fig. 3 shows a radar sensor according to an embodiment of the invention.

Fig. 4 shows a communication system utilizing two radar sensors according to an embodiment.

Fig. 5 shows a radar sensor comprising a combined circuit with an antenna coupler according to an embodiment of the invention.

Fig. 6 shows a flow-chart of a method according to an exemplary embodiment.

**Detailed description of embodiments**

The illustration in the drawings is schematically. In different drawings, similar or identical elements are provided with the same reference numerals.

The following detailed description is merely exemplary nature and is not intended to limit application and uses. Furthermore, there is no intention to be bound by any theory presented in the preceding background or summary or the following detailed description.

The invention is related to a radar sensor or "device" that can be used as a radar sensor and as a communication device as well. It is a universal high-frequency device with applications in radar, as a communication transceiver, as a receiver or as a transmitter. Any modulation scheme may be applied.

The main parts of the combined circuit of the radar sensor with communication capabilities are: two coupled oscillators, amplifiers, mixer and one or more antennas. The first oscillator is connected to, e.g. part of, a transmit path and the second oscillator is connected to, e.g. part of, a receive path of the device.

The combined circuit has two operational modes. The first operational mode is the radar mode. In this mode, both oscillators oscillate at exactly the same frequency. The second operational mode is the communication mode. In this mode, the oscillators oscillate at different frequencies. Transmitter, receiver or transceiver operation is possible. Also, bidirectional communication is possible.

The radar sensor with communication capabilities in radar mode may operate in FMCW modulation. However, it may be configured to operate according to other modulation schemes or as a pulse radar.

The combined circuit may be implemented as a radar chip and may radiate and/or receive high frequency electromagnetic signals using on-chip integrated antennas or one or more external antennas designed as antenna in package or antenna on board. Preferably, the electromagnetic signals have a high frequency in the Gigahertz or Terahertz range.

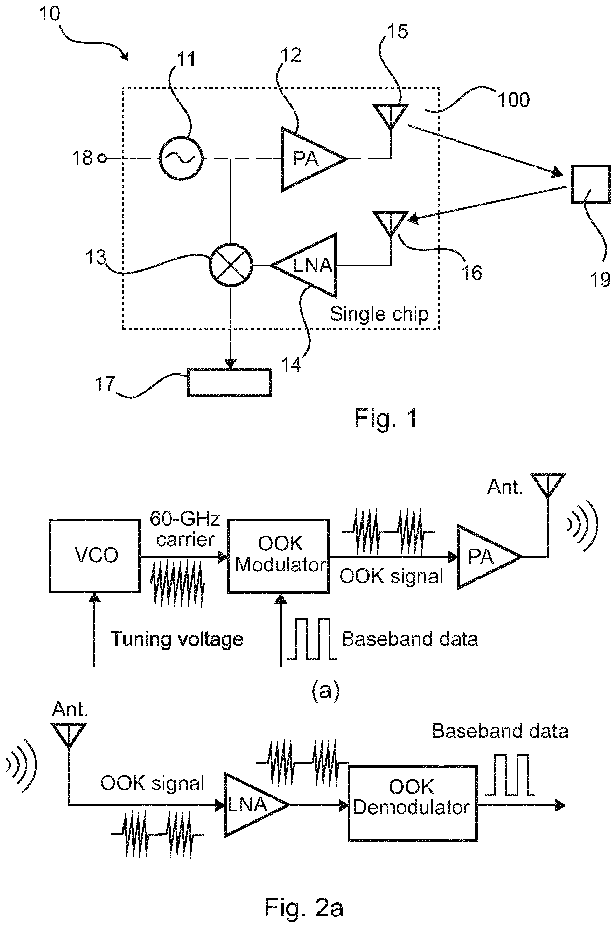

Fig. 1 shows a radar sensor 10. The main parts of the radar sensor 10 are: An oscillator 11, power amplifier 12, mixer 13, low noise amplifier 14, transmit antenna 15 and receive antenna 16. The output signal of mixer 13 is connected to baseband processor 17.

In the following, an exemplary operation principle of the radar sensor 10 is described shortly: The oscillator 11 generates a periodic signal at a certain frequency $f_o$. The oscillator signal may be modulated in different modulation schemes according to requirements of the radar system.

The radar sensor may operate according to the frequency modulated continuous wave (FMCW) principle. For this, the oscillator 11 receives a time varying modulation signal 18 at oscillator input. The output of oscillator 11 is connected to the power amplifier 12, where the signal is amplified to a power level large enough to be transmitted via transmit antenna 15. In operation, the transmitted signal will be reflected by objects 19 in front of the radar sensor 10.

The reflected signal arrives at receive antenna 16 and generates an electrical signal that is conducted to low noise amplifier 14. The amplified receive signal (RX-signal) is processed in mixer 13. Additionally, the mixer 13 receives the signal from oscillator 11, the so-called LO-signal. Because the RF-signal and the LO-signal both have nearly the same frequency, the mixing product (IF-signal) has a very low frequency $\Delta f$. $\Delta f$ is the frequency difference between the transmitted frequency $f_o$ and the received frequency $f_r$. It is a measure of the distance to the object 19 because it is proportional to the travelling time to the object 19 and back to receive antenna 16.

The IF-signal is the output signal from mixer 13 and will be amplified and processed in baseband processor 17 after analogue to digital conversion. The processing may comprise a fast Fourier transformation to get the time delay information and with this the distance information to object 19.

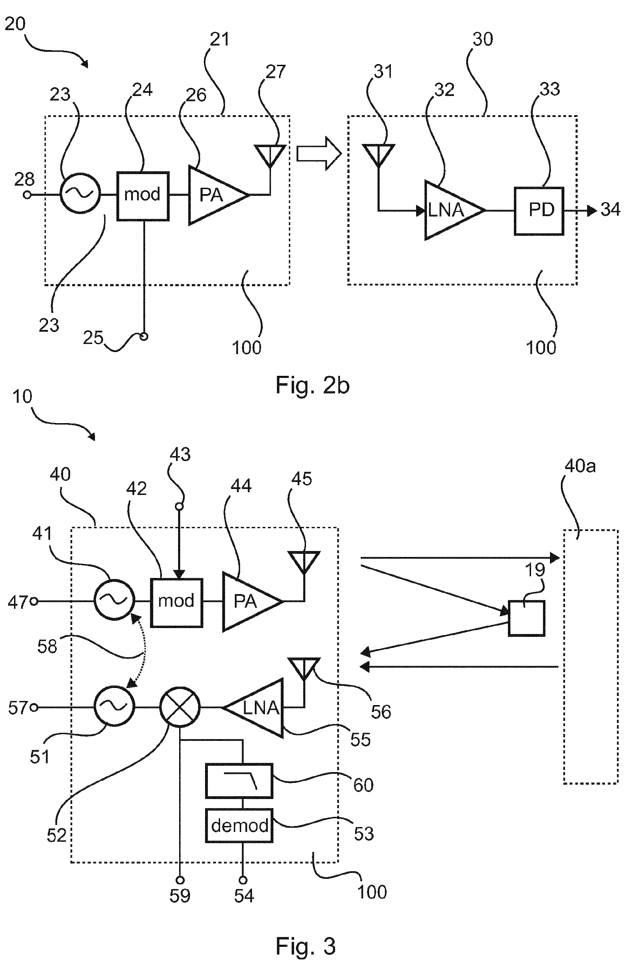

Fig. 2a and 2b show a simple millimeter wave communication device 20. It comprises a transmitter 21 and a receiver 30. The transmitter 21 comprises an oscillator 23 with tuning input 28, a modulator 24, power amplifier 26 and transmit antenna 27. The modulator 24 has modulator input 25 to supply the input bit stream. The tuning input 28 of the oscillator 23 is for adjusting the transmitter frequency to the right frequency band.

The receiver 30 comprises a low noise amplifier 32, a power detector 33 and a receive antenna 31. The power detector 33 has data output 34.

The operation principle of the communication device 20 is the following: The oscillator 23 generates a high-frequency signal at desired frequency, for example at 60 GHz. The frequency will be tuned via tuning input 28. The signal will be modulated in modulator 24 by bit-stream to be transferred with a signal applied to modulator input 25. The modulation scheme may be ASK (amplitude shift keying) or OOK (on-off keying) or any other scheme.

The power amplifier 26 may amplify the high-frequency signal to the desired power level of 10 dBm (as an example). After the modulator 24 and the power amplifier 26, the signal reaches the transmit antenna 27 from where it is transmitted through air towards receiver 30. There, it reaches a receive antenna 31 and a low noise amplifier 32. The low noise amplifier 32 will amplify the signal and transfer it to the demodulator, in this case, a power detector 33 (corresponding in this example to modulation scheme mentioned above) that will demodulate the signal and give it to data output 34.

There are several issues with the systems described above. First of all, the radar sensor can be used in radar applications only and the communication device can be applied for communication systems only. It is not possible to switch one device from one application to the other. Moreover, it may not be possible to use the radar sensor for real-time bidirectional communication . However, this may be desirable for automotive applications, for example. There, it may be required to get radar information and additionally to communicate between two mobile vehicles.

Another issue with the communication device described above may be the unidirectional flow of information. In many cases, it is desired to obtain bidirectional flow of information with minimum latency. In communication device 20 according to Fig. 2, two transmitters and two receivers may be required to ensure bidirectional communication. If the system requires radar and communication functionality, than a further additional device of radar-type has to be added to the system. The communication channels for bidirectional communication may use time-division multiplexing, frequency-division multiplexing or polarization-division multiplexing.

The following figures show further embodiments. According to the embodiment of the invention depicted in Fig. 3, a combined circuit is provided, which is capable to perform radar operation and communication as well by switching from radar mode to communication mode.

The combined circuit 40 comprises a transmit path and a receive path with the following circuit blocks:
The transmit path comprises: A first oscillator 41 with tuning input 47, a modulator 42 with data input 43, a power amplifier 44 and a transmit antenna 45.

The receive path comprises: A second oscillator 51 with tuning input 57, a mixer 52, a filter 60, a demodulator 53 with data output 54, a low noise amplifier 55 and a receive antenna 56.

The first oscillator 41 with tuning input 47 generates the transmit signal. The output of the first oscillator 41 is connected to the input of modulator 42 with data input 43. The output of modulator 43 is connected to the power amplifier 44. The output of the power amplifier 44 is connected to the transmit antenna 45.

The second oscillator 51 with tuning input 57 generates the LO signal for the receive path. The output of the second oscillator 51 is connected to the LO-input of mixer 52. The RF-input of mixer 52 is connected to output of low noise amplifier 55 and input of low noise amplifier 55 is connected to receive antenna 56. The IF-output of mixer 52 has a direct IF-output 59 and is connected to filter 60 and from this to demodulator 53 with data output 54. The two oscillators 41 and 51 are coupled weakly by coupling mechanism 58.

The antennas 45 and 56 may be placed on chip or on PCB or in package.

To describe functional principles of the combined circuit 40 it has to be distinguished between radar mode and communication mode.

In radar mode, the two oscillators are oscillating at the same frequency. This is ensured by using same oscillator types and by positioning/integrating the two oscillators in vicinity to each other on/in the same semiconductor substrate, and by applying identical voltages at the tuning inputs 47 and 57 or by short cutting the tuning inputs 47 and 57. Because of the coupling mechanism 58 both oscillators 47 and 57 are oscillating at exactly the same frequency and phase noise is reduced and correlated.

In this example, FMCW radar principle is assumed. However, other radar principles are possible as well.

The first oscillator 41 generates the transmit signal with linear frequency ramp and delivers the signal to the modulator 42 and to the input of the power amplifier 44 where it is amplified and given to the transmit antenna 45 where it is radiated to the air. In this case, no modulation signal is applied to data input 43. The electromagnetic radiation from transmit antenna 45 is reflected at a target 19 and comes back partly at receive antenna 56. The weak received signal is amplified in low noise amplifier 55. The amplified signal enters the mixer where it is down-converted to baseband and the resulting IF-signal is given to the IF-output 59. From there, the signal can be digitized and processed in baseband processor, for example with Fourier transformation to determine the distance to target 19. The linear frequency ramp can be generated in oscillators 47 and 57 together with fractional-N PLL (not shown in Fig.3). Because of coupling mechanism 58 both oscillators have same instantaneous frequency and because of time delay in received signal the receive-frequency is shifted by an amount proportional to the distance r.

$$r = \frac{c}{2}\Delta t = \frac{c}{2} \cdot \frac{\Delta f}{df/dt}$$

wherein c is the speed of light, df/dt is the linear ramp rate in Hz per second.

In communication mode, the two oscillators 41 and 51 in Fig.3 are oscillating at different frequencies. To enable this, different voltages are applied at tuning inputs 47 and 57. In one embodiment, the voltage difference is about 1V. Because of the weak coupling mechanism 58, the oscillators 47 and 57 are out of their locking range and are oscillating at different frequencies as long as voltage difference at tuning inputs 47 and 57 is large enough. In this example, amplitude modulation principle for communication is used by applying a bit-stream of "zeroes" and "ones" to data input 43. However, other modulation principles may be implemented as well.

The first oscillator 41 generates the transmit signal with frequency $f_{t1}$ ($f_{t1}$=63GHz is an example) and delivers the signal to the modulator 42 where it is amplitude modulated and delivered to the input of the power amplifier 44 where it is amplified and given to the transmit antenna 45 where it is radiated to air. In this case, amplitude modulation signal is applied to data input 43. This means that the amplitude of transmit signal changes over time according to bit stream to be transferred. The modulated electromagnetic radiation from transmit antenna 45 reaches a paired transceiver combined circuit 40a where it is received and processed.

Because of bidirectional communication, the paired combined circuit 40a transmits a bit-stream via modulated signal at a carrier frequency ftz ($f_{t2}$=57GHz as an example) towards combined circuit 40. The signal enters receive antenna 56 and is amplified in low noise amplifier 55. The amplified signal enters the mixer 52 where it is down-converted to IF-frequency or to baseband and the resulting IF-signal is given to the IF-output 59 and to demodulator 53. To down-convert the signal to IF, the second oscillator 51 oscillates at frequency near to transmit frequency of combined circuit 40a, for example at $f_{LO1}$ = 58GHz. This results in IF-frequency in combined circuit 40 of

$$f_{IF1}= f_{t2} - f_{LO1}=1\,GHz.$$

The filter 60 with low-pass characteristic has the task to filter out unwanted signals coming from other sources, especially from transmit path of combined circuit 40 with $f_{t1}$ = 63GHz. This transmit signal of combined circuit 40 cannot be fully isolated from receiver input of combined circuit 40 and will partly enter the receive path and will be down-converted in mixer 52 to a parasitic signal component at frequency

$$f_{IF1p}= f_{t1} - f_{LO1}=5\,GHz.$$

This parasitic signal is attenuated very much because of two reasons: 1) Mixer gain of mixer 52 is low at this high frequency and 2) The filter 60 with low-pass characteristic strongly attenuates this parasitic signal because of the large relative distance in frequency between $f_{IF1}$ and $f_{IF1p}$.

The demodulator 53 in this example is a power detector, converting the IF-signal to a bit-stream and brings it to data output 54.

The embodiment in communication mode provides bidirectional communication between combined circuit 40 and combined circuit 40a with low latency.

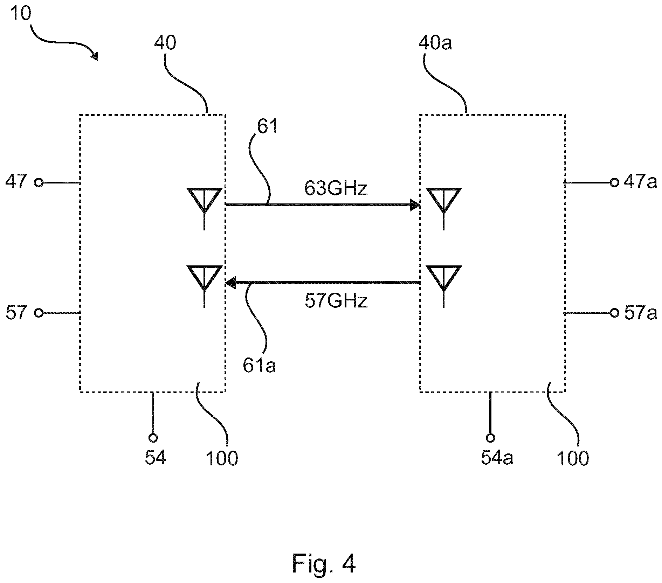

Fig. 4 shows the communication system schematically. The system comprises a combined circuit 40 and a combined circuit 40a. The bidirectional communication channels are indicated with arrows. The forward channel 61 is directed from combined circuit 40 to combined circuit 40a and the backward channel 61a is directed from combined circuit 40a to combined circuit 40.

According to the operational principle described above, the tuning inputs 47, 57, 47a and 57a are adjusted to voltages to obtain the right frequencies in all transmitter and receiver paths. In our example, the transmit frequencies are $f_{t1}$ = 63GHz, ftz = 57GHz and LO-frequencies are $f_{LO1}$ = 58GHz and $f_{LO2}$ = 62GHz. With these frequency values, the IF-frequencies in combined circuits 40 and 40a are $f_{IF1}$ = 1GHz and $f_{IF1a}$ = 1GHz and following, the desired signals can be detected easily because it can be separated from transmit signal by filtering. The parasitic IF-frequencies are 4 GHz away from desired IF-frequency in both cases. The embodiment in communication mode described above uses an IF-frequency of 1GHz. Other IF-frequencies can be used as well. Especially, the version with zero-IF can be utilized by taking advantage of the direct conversion principle.

The embodiments described above may be realized in different integration levels. For example, the building blocks are integrated on a single Silicon chip. To achieve a weak coupling between the first oscillator 41 and the second oscillator 51, the oscillators may be arranged side by side on one Silicone chip. However, also a conducting line with switch between active nodes of the two oscillators may be utilized for the coupling. Other possible coupling mechanisms are capacitive coupling and/or inductive coupling by a transformer structure.

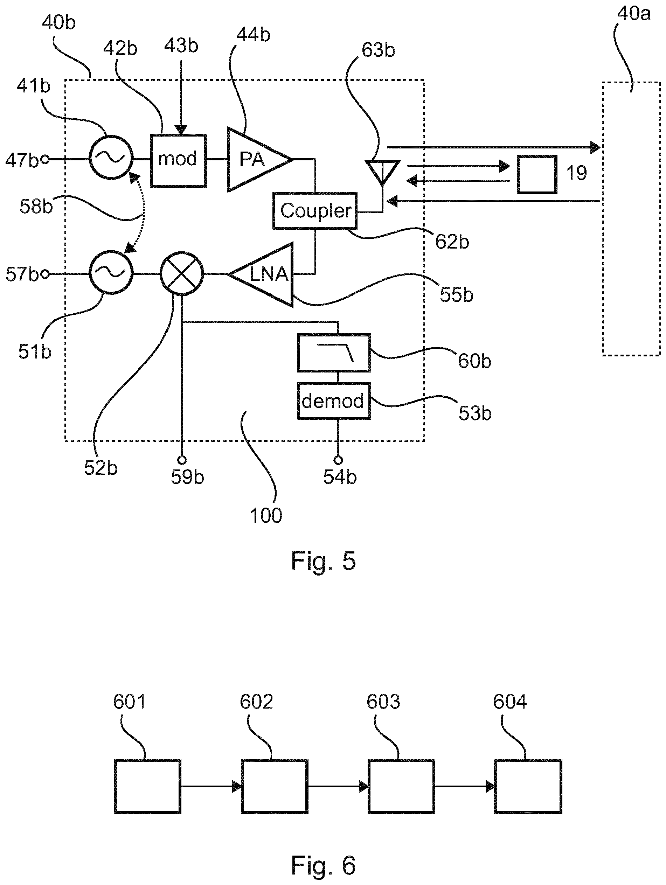

Fig. 5 shows another embodiment of the invention of the combined circuit 40b.

The combined circuit 40b comprises a transmit path and a receive path with the following circuit blocks:
The transmit path comprises: A first oscillator 41b with tuning input 47b, a modulator 42b with data input 43b, a power amplifier 44b, an antenna coupler 62 and a transmit/receive antenna 63b.

The receive path comprises: A second oscillator 51b with tuning input 57b, a mixer 52b, a filter 60b, a demodulator 53b with data output 54b, a low noise amplifier 55b, an antenna coupler 62 and a transmit/receive antenna 63b. In this embodiment, the antenna coupler 62 and the transmit/receive antenna 63b are utilized for transmit path and for receive path as well.

The first oscillator 41b with tuning input 47b generates the transmit signal. The output of the first oscillator 41b is connected to the input of modulator 42b with data input 43b. The output of modulator 43b is connected to the power amplifier 44b. The output of the power amplifier 44b is connected to the antenna coupler 62b.

The second oscillator 51b with tuning input 57b generates the LO signal for the receive path. The output of the second oscillator 51b is connected to the LO-input of mixer 52b. The RF-input of mixer 52b is connected to output of low noise amplifier 55b and input of low noise amplifier 55b is connected to antenna coupler 62b. The IF-output of mixer 52b has a direct IF-output 59b and is connected to filter 60b and from this to demodulator 53b with data output 54b. The two oscillators 41b and 51b are coupled weakly by coupling mechanism 58b. The antenna coupler 62b is connected to transmit/receive antenna 63b.

The functional principles of combined circuit 40b is similar to the one described for combined circuit 40 in Fig.3 and is comprehensible to skilled persons in radar or communication field. The difference in combined circuit 40b to combined circuit 40 is the use of only one antenna for transmission and for reception. The transmit signals and receive signals are combined in antenna coupler 62b and one transmit/receive antenna 63b is used for transmission and for reception at the same time.

Fig. 6 shows a flow-chart of a method according to an exemplary embodiment. In step 601, a radar mode, in which radar signals are emitted and received, is assumed by the radar sensor. In the radar mode a radar signal is emitted in order to measure, for example, a filling material level, a velocity of an object, a position of an object or a surface topology. In this mode both oscillators are forced to oscillate at same frequency because the first oscillator is electromagnetically coupled with the second oscillator (of the receive path), such that the first oscillator and the second oscillator are encouraged to oscillate at the same frequency.

In step 602, a voltage difference is applied to the two tuning inputs of the two oscillators and, at step 603, the radar sensor switches into a communication mode, in which communication signals are emitted and received, and in which the first oscillator (of the transmit path) oscillates at different frequency in comparison to the second oscillator (of the receive path). In step 604, the first oscillator is, again, by electromagnetically coupling between the oscillators, resulting in the combined circuit switching back into the radar mode. This coupling is initiated by equal tuning voltages at the first tuning input and the second tuning input, which has to fall below a predefined threshold voltage, such that the first oscillator and the second oscillator are encouraged to oscillate at the same frequency.

List of reference numerals:

| 10 | Radar sensor | 20 | communication device | 40, 40a | combined circuit |
|---|---|---|---|---|---|
| 11 | oscillator | 21 | transmitter | 41, 41b | first oscillator |
| 12 | Power amplifier | 30 | receiver | 42, 42b | modulator |
| 13 | mixer | 23 | oscillator | 43, 43b | data input |
| 14 | Low noise amplifier | 24 | modulator | 44, 44b | power amplifier |
| 15 | Transmit antenna | 25 | modulator input | 45 | transmit antenna |

(continued)

| 16 | Receive antenna | 26 | Power amplifier | 46 | transmit and receive antenna |
|---|---|---|---|---|---|
| 17 | Baseband processor | 27 | Transmit antenna | 47, 47a, 47b | tuning input |
| 18 | Modulation signal | 28 | Tuning input | 51, 51b | Second oscillator |
| 19 | object | 31 | Receive antenna | 52, 52b | mixer |
| | | 32 | low noise amplifier | 53, 53b | demodulator |
| | | 33 | power detector | 54, 54a | Data output |
| | | 34 | data output | 55, 55b | low noise amplifier |
| | | | | 56 | receive antenna |
| 100 | Single chip | | | 57, 57a | tuning input |
| | | | | 58 | coupling mechanism |
| | | | | 59 | IF-output |
| | | | | 60 | filter |

| | | | 61, 61a | Forward channel, backward channel |
|---|---|---|---|---|
| | | | 62, 62b | antenna coupler |
| | | | 63, 63b | transmit/receive antenna |

**Claims**

1. Radar sensor (10), comprising a combined circuit (40) with radar and communication capabilities, configured to assume a radar mode, in which radar signals are emitted and received, and a communication mode, in which communication signals are emitted and received, the combined circuit comprising:

   a transmit path comprising a first oscillator (41) with a first tuning input (47) configured to generate a transmit signal, and a transmit antenna (45, 63b), configured to transmit the transmit signal towards an object (19);
   a receive path comprising a receive antenna (56, 63b), configured to receive the transmit signal after it has been reflected by the object, and a second oscillator (51) with a second tuning input (57);
   a coupling (58), configured to electromagnetically couple the first oscillator with the second oscillator, when the radar sensor is in radar mode and a difference in a tuning voltage at the first tuning input (47) and the second tuning input (57) does not exceed a predefined threshold, such that the first oscillator and the second oscillator oscillate at the same frequency;
   wherein the coupling (58) is further configured to electromagnetically decouple the first oscillator (41) from the second oscillator (51), when the radar sensor is in communication mode and the difference in the tuning voltage at the first tuning input (47) and the second tuning input (57) exceeds the predefined threshold, such that the first oscillator and the second oscillator do not oscillate at the same frequency.

2. Radar sensor (10) according to one of the preceding claims,
   wherein the first oscillator (41) and the second oscillator (51) have the same circuit topology and the same layout.

3. Radar sensor (10) according to one of the preceding claims,
   wherein the functional blocks (41, 47, 45, 63b, 42, 43, 44, 51, 57, 52, 60, 53, 54, 55, 56, 63b) of the transmit path and the receive path are placed on a single chip (100).

4. Radar sensor (10) according to one of the preceding claims, the transmit path further comprising:
   a modulator (42) with a data input (43) and a power amplifier (44).

5. Radar sensor (10) according to claim 4,

wherein in the power amplifier (44) and the modulator (42) of the transmit path are implemented in one single functional block as a power amplifier with gain control for amplitude modulation or on-off keying.

6. Radar sensor (10) according to one of the preceding claims, the receive path further comprising:
   a mixer (52), a filter (60), a demodulator (53) with a data output (54) and a low noise amplifier (55).

7. Radar sensor (10) according to one of the preceding claims,
   wherein the receive path is configured as a quadrature receive path.

8. Radar sensor (10) according to one of the preceding claims,
   wherein, when the radar sensor is in radar mode, the first and second oscillators (41, 51) have the same voltage at their tuning inputs and both oscillators oscillate at the same frequency.

9. Radar sensor (10) according to one of the preceding claims,
   wherein, when the radar sensor is in communication mode, the first and second oscillators (41, 51) have different voltages at their tuning inputs and both oscillators oscillate at different frequencies.

10. Radar sensor (10) according to one of the preceding claims,
    wherein, when the radar sensor is in communication mode, the transmit frequency of the transmit path corresponds to the receive frequency of the receive path, and the transmit frequency of the receive path corresponds to the receive frequency of the transmit path.

11. Radar sensor (10) according to one of the preceding claims,
    wherein the second oscillator (51) is coupled to the first oscillator (41) by injection locking.

12. Radar sensor (10) according to one of the preceding claims,
    wherein the second oscillator (51) is coupled to the first oscillator (41) by capacitive coupling between oscillator signal nodes.

13. Radar sensor (10) according to one of the preceding claims,
    wherein the second oscillator (51) is coupled to the first oscillator (41) by transformer coupling between oscillator signal branches.

14. Vehicle, comprising a radar sensor (10) according to one of the preceding claims.

15. Method of operating the radar sensor (10) according to one of claims 1 to 13, comprising the step of:

    assuming the radar mode, in which radar signals are emitted and received, and in which the first oscillator (41) is electromagnetically coupled with the second oscillator (51), such that the first oscillator and the second oscillator oscillate at the same frequency;
    and further comprising the step of
    assuming the communication mode;
    electromagnetically decoupling the first oscillator (41) from the second oscillator (51), when the radar sensor is in the communication mode and a difference in a tuning voltage at the first tuning input (47) and the second tuning input (57) exceeds a predefined threshold, such that the first oscillator and the second oscillator do not oscillate at the same frequency.

16. Program code, which, when being executed by a processor (17) of the radar sensor (10) according to one of claims 1 to 13, causes the radar sensor to perform the method of claim 15.

**Patentansprüche**

1. Ein Radarsensor (10), der eine kombinierte Schaltung (40) mit Radar- und Kommunikationsfähigkeiten umfasst, die so eingerichtet ist, dass sie einen Radarmodus, in dem Radarsignale ausgesendet und empfangen werden, und einen Kommunikationsmodus, in dem Kommunikationssignale ausgesendet und empfangen werden, annimmt, wobei die kombinierte Schaltung umfasst:

einen Sendepfad, der einen ersten Oszillator (41) mit einem ersten Abstimmungseingang (47) umfasst, der eingerichtet ist, um ein Sendesignal zu erzeugen, und eine Sendeantenne (45, 63b), die eingerichtet ist, um das Sendesignal in Richtung eines Objekts (19) zu senden;

einen Empfangsweg, der eine Empfangsantenne (56, 63b) umfasst, die so eingerichtet ist, dass sie das Sendesignal empfängt, nachdem es von dem Objekt reflektiert wurde, und einen zweiten Oszillator (51) mit einem zweiten Abstimmeingang (57);

eine Kopplung (58), die eingerichtet ist, um den ersten Oszillator mit dem zweiten Oszillator elektromagnetisch zu koppeln, wenn sich der Radarsensor im Radarmodus befindet und eine Differenz in einer Abstimmspannung am ersten Abstimmeingang (47) und am zweiten Abstimmeingang (57) einen vorgegebenen Schwellenwert nicht überschreitet, so dass der erste Oszillator und der zweite Oszillator mit der gleichen Frequenz schwingen;

wobei die Kopplung (58) ferner so eingerichtet ist, dass sie den ersten Oszillator (41) vom zweiten Oszillator (51) elektromagnetisch entkoppelt, wenn sich der Radarsensor im Kommunikationsmodus befindet und die Differenz der Abstimmspannung am ersten Abstimmeingang (47) und am zweiten Abstimmeingang (57) den vordefinierten Schwellenwert überschreitet, so dass der erste Oszillator und der zweite Oszillator nicht mit der gleichen Frequenz schwingen.

2. Der Radarsensor (10) nach einem der vorhergehenden Ansprüche, wobei der erste Oszillator (41) und der zweite Oszillator (51) die gleiche Schaltungstopologie und das gleiche Layout aufweisen.

3. Der Radarsensor (10) nach einem der vorhergehenden Ansprüche, wobei die funktionalen Blöcke (41, 47, 45, 63b, 42, 43, 44, 51, 57, 52, 60, 53, 54, 55, 56, 63b) des Sendepfades und des Empfangspfades auf einem einzigen Chip (100) angeordnet sind.

4. Der Radarsensor (10) nach einem der vorhergehenden Ansprüche, wobei der Sendepfad ferner umfasst:
einen Modulator (42) mit einem Dateneingang (43) und einen Leistungsverstärker (44).

5. Der Radarsensor (10) nach Anspruch 4,
wobei der Leistungsverstärker (44) und der Modulator (42) des Sendepfads in einem einzigen funktionalen Block als Leistungsverstärker mit Verstärkungsregelung für Amplitudenmodulation oder On-Off-Tastung implementiert sind.

6. Der Radarsensor (10) nach einem der vorhergehenden Ansprüche, wobei der Empfangspfad ferner umfasst:
einen Mischer (52), ein Filter (60), einen Demodulator (53) mit einem Datenausgang (54) und einen rauscharmen Verstärker (55).

7. Der Radarsensor (10) nach einem der vorangehenden Ansprüche, wobei der Empfangsweg als Quadraturempfangsweg eingerichtet ist.

8. Der Radarsensor (10) nach einem der vorhergehenden Ansprüche, wobei im Radarmodus des Radarsensors der erste und der zweite Oszillator (41, 51) an ihren Abstimmeingängen die gleiche Spannung aufweisen und beide Oszillatoren mit der gleichen Frequenz schwingen.

9. Der Radarsensor (10) nach einem der vorhergehenden Ansprüche, wobei, wenn sich der Radarsensor im Kommunikationsmodus befindet, der erste und der zweite Oszillator (41, 51) unterschiedliche Spannungen an ihren Abstimmungseingängen aufweisen und beide Oszillatoren mit unterschiedlichen Frequenzen schwingen.

10. Der Radarsensor (10) nach einem der vorhergehenden Ansprüche, wobei, wenn sich der Radarsensor im Kommunikationsmodus befindet, die Sendefrequenz des Sendepfads der Empfangsfrequenz des Empfangspfads entspricht und die Sendefrequenz des Empfangspfads der Empfangsfrequenz des Sendepfads entspricht.

11. Der Radarsensor (10) nach einem der vorhergehenden Ansprüche, wobei der zweite Oszillator (51) mit dem ersten Oszillator (41) durch Injektionsverriegelung gekoppelt ist.

12. Der Radarsensor (10) nach einem der vorhergehenden Ansprüche,
wobei der zweite Oszillator (51) mit dem ersten Oszillator (41) durch kapazitive Kopplung zwischen Oszillatorsignalknoten gekoppelt ist.

**13.** Der Radarsensor (10) nach einem der vorangehenden Ansprüche,
bei dem der zweite Oszillator (51) mit dem ersten Oszillator (41) durch transformatorische Kopplung zwischen Oszillatorsignalzweigen gekoppelt ist.

**14.** Ein Fahrzeug, umfassend einen Radarsensor (10) nach einem der vorangehenden Ansprüche.

**15.** Ein Verfahren zum Betreiben des Radarsensors (10) nach einem der Ansprüche 1 bis 13, umfassend den Schritt:

Einnehmen des Radarmodus, in dem Radarsignale ausgesendet und empfangen werden, und in dem der erste Oszillator (41) mit dem zweiten Oszillator (51) elektromagnetisch gekoppelt wird, so dass der erste Oszillator und der zweite Oszillator mit derselben Frequenz schwingen;
und ferner den Schritt umfassend Einnehmen des Kommunikationsmodus;
elektromagnetisches Entkoppeln des ersten Oszillators (41) vom zweiten Oszillator (51), wenn sich der Radarsensor im Kommunikationsmodus befindet und eine Differenz in einer Abstimmspannung an dem ersten Abstimmeingang (47) und dem zweiten Abstimmeingang (57) einen vordefinierten Schwellenwert überschreitet, so dass der erste Oszillator und der zweite Oszillator nicht mit derselben Frequenz schwingen.

**16.** Ein Programmcode, der, wenn er von einem Prozessor (17) des Radarsensors (10) nach einem der Ansprüche 1 bis 13 ausgeführt wird, den Radarsensor veranlasst, das Verfahren nach Anspruch 15 durchzuführen.

## Revendications

**1.** Capteur radar (10), comprenant un circuit combiné (40) ayant des capacités de radar et de communication, conçu pour adopter un mode radar, dans lequel des signaux radar sont émis et reçus, et un mode communication, dans lequel des signaux de communication sont émis et reçus, le circuit combiné comprenant :

une voie d'émission comprenant un premier oscillateur (41) doté d'une première entrée d'accord (47), conçu pour générer un signal d'émission, et une antenne d'émission (45, 63b) conçue pour émettre le signal d'émission vers un objet (19) ;
une voie de réception comprenant une antenne de réception (56, 63b) conçue pour recevoir le signal d'émission après qu'il a été réfléchi par l'objet, et un second oscillateur (51) doté d'une seconde entrée d'accord (57) ;
un couplage (58) conçu pour coupler de manière électromagnétique le premier oscillateur et le second oscillateur quand le capteur radar est en mode radar et qu'une différence de tension d'accord à la première entrée d'accord (47) et la seconde entrée d'accord (57) ne dépasse pas un seuil prédéfini, de telle sorte que le premier oscillateur et le second oscillateur oscillent à la même fréquence ;
dans lequel le couplage (58) est en outre conçu pour découpler de manière électromagnétique le premier oscillateur (41) du second oscillateur (51) quand le capteur radar est en mode communication et que la différence de tension d'accord à la première entrée d'accord (47) et la seconde entrée d'accord (57) dépasse le seuil prédéfini, de telle sorte que le premier oscillateur et le second oscillateur n'oscillent pas à la même fréquence.

**2.** Capteur radar (10) selon l'une des revendications précédentes,
dans lequel le premier oscillateur (41) et le second oscillateur (51) présentent la même topologie de circuit et la même disposition.

**3.** Capteur radar (10) selon l'une des revendications précédentes,
dans lequel les blocs fonctionnels (41, 47, 45, 63b, 42, 43, 44, 51, 57, 52, 60, 53, 54, 55, 56, 63b) de la voie d'émission et de la voie de réception sont placés sur une unique puce (100).

**4.** Capteur radar (10) selon l'une des revendications précédentes, la voie d'émission comprenant en outre :
un modulateur (42) doté d'une entrée de données (43) et un amplificateur de puissance (44).

**5.** Capteur radar (10) selon la revendication 4,
dans lequel l'amplificateur de puissance (44) et le modulateur (42) de la voie d'émission sont mis en oeuvre dans un unique bloc fonctionnel sous la forme d'un amplificateur de puissance avec commande de gain pour la modulation en amplitude ou la modulation tout ou rien.

**6.** Capteur radar (10) selon l'une des revendications précédentes, la voie de réception comprenant en outre :

un mélangeur (52), un filtre (60), un démodulateur (53) doté d'une sortie de données (54) et un amplificateur à faible bruit (55).

7. Capteur radar (10) selon l'une des revendications précédentes,
   dans lequel la voie de réception est conçue sous la forme d'une voie de réception en quadrature.

8. Capteur radar (10) selon l'une des revendications précédentes,
   dans lequel, quand le capteur radar est en mode radar, le premier et le second oscillateur (41, 51) présentent la même tension à leur entrée d'accord et les deux oscillateurs oscillent à la même fréquence.

9. Capteur radar (10) selon l'une des revendications précédentes,
   dans lequel, quand le capteur radar est en mode communication, le premier et le second oscillateur (41, 51) présentent des tensions différentes à leur entrée d'accord et les deux oscillateurs oscillent à des fréquences différentes.

10. Capteur radar (10) selon l'une des revendications précédentes,
    dans lequel, quand le capteur radar est en mode communication, la fréquence d'émission de la voie d'émission correspond à la fréquence de réception de la voie de réception, et la fréquence d'émission de la voie de réception correspond à la fréquence de réception de la voie d'émission.

11. Capteur radar (10) selon l'une des revendications précédentes,
    dans lequel le second oscillateur (51) est couplé au premier oscillateur (41) par verrouillage par injection.

12. Capteur radar (10) selon l'une des revendications précédentes,
    dans lequel le second oscillateur (51) est couplé au premier oscillateur (41) par couplage capacitif entre des noeuds de signal d'oscillateur.

13. Capteur radar (10) selon l'une des revendications précédentes,
    dans lequel le second oscillateur (51) est couplé au premier oscillateur (41) par couplage par transformateur entre des branches de signal d'oscillateur.

14. Véhicule, comprenant un capteur radar (10) selon l'une des revendications précédentes.

15. Procédé de fonctionnement du capteur radar (10) selon l'une des revendications 1 à 13, comprenant l'étape consistant à :

    adopter le mode radar, dans lequel des signaux radar sont émis et reçus et dans lequel le premier oscillateur (41) est couplé de manière électromagnétique au second oscillateur (51), de telle sorte que le premier oscillateur et le second oscillateur oscillent à la même fréquence ;
    et comprenant en outre l'étape consistant à
    adopter le mode communication ;
    découpler de manière électromagnétique le premier oscillateur (41) du second oscillateur (51) quand le capteur radar est en mode communication et qu'une différence de tension d'accord à la première entrée d'accord (47) et la seconde entrée d'accord (57) dépasse un seuil prédéfini, de telle sorte que le premier oscillateur et le second oscillateur n'oscillent pas à la même fréquence.

16. Code de programme qui, quand il est exécuté par un processeur (17) du capteur radar (10) selon l'une des revendications 1 à 13, amène le capteur radar à exécuter le procédé selon la revendication 15.

Fig. 1

(a)

Fig. 2a

Fig. 2b

Fig. 3

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7283087 B2

- US 2012092205 A1